# EUROPEAN PATENT APPLICATION

(11) **EP 4 102 428 A1**
(43) Date of publication of application: **14.12.2022**
(21) Application number: 22178377.2
(22) Date of filing: 10.06.2022
(51) Int. Cl.: G06Q 10/06, G06Q 50/30

(54) **AIRCRAFT SELECTION FOR DISPATCH OPTIMIZER**

(30) Priority: 11.06.2021 US 202117345302
(71) Applicant: Rockwell Collins, Inc., Cedar Rapids, IA 52498 (US)
(72) Inventor: ANDERSON, Ross D., Lakeville, MN (US); CHAKRAVARTY, Subhashish, Marion, IA (US); UNDERWOOD, Darin M., Cedar Rapids (US); LORCH, Matthew M., Cedar Rapids, IA (US); WALTHALL, Rhonda Dawn, Lancaster (US)
(74) Representative: Dehns

(57) **Abstract**

Information regarding flight schedules, available aircraft, and maintenance information is received from one or more systems. A graph database is generated based on the received information. A graph traversal algorithm is applied to the graph database to determine an assignment of the available aircraft to the flight schedules based on reducing a risk of aircraft-on-ground at a remote location, reducing actual costs, or reducing a time cost.

## Description

### TECHNICAL FIELD

The present disclosure generally relates to method and systems for routing mobile vehicles.

### BACKGROUND

Aircraft flight schedules may be planned weeks or months before a flight is scheduled to depart. The flight schedules may be determined based on demand for flights from departure locations to arrival locations. Subsequent to developing the flight schedule, aircrafts in a fleet may be assigned to the flights. The assignment of the aircraft to the flight schedule is known as tail assignment. Each of the aircrafts may include various components required for successful operation. The components may be tracked in a minimum equipment list (MEL). A master minimum equipment list (MMEL) is a master list of aircraft components for a manufacturer's aircraft configurations. The MMEL may be adapted to the minimum equipment list (MEL). The MEL may be an aircraft specific list based on the equipment, level of redundancy, and on-board systems and may be approved by a governing regulatory agency. The MEL provides information on aircraft airworthiness when a component has failed. The MEL may be based on regulatory authorization to continue to operate the aircraft with inoperable instruments or equipment. The aircraft may be operated under all applicable condition and limitations contained in the MEL. As an age, a number of flight cycles, or a number of flight hours increase, the components may experience a higher probability of failure. In the event of component failure of a MEL component, the aircraft may experience an aircraft-on-ground (AOG) event. The aircraft may be AOG until the component is repaired or replaced in compliance with the minimum equipment list. Therefore, it would be advantageous to provide a device, system, and method that cures the shortcomings associated with being AOG described above.

### SUMMARY

A computer-implemented method for tail assignment is disclosed, in accordance with one or more embodiments of the present disclosure. In one embodiment, the method includes receiving information from one or more systems. In another embodiment, the information received includes flight schedules. In another embodiment, each of the flight schedules includes a departure time, a departure location, and an arrival location. In another embodiment, the information received includes available aircraft. In another embodiment, each of the available aircraft includes a failure probability resulting in an aircraft-on-ground (AOG) event. In another embodiment, each of the available aircraft further include a current location. In another embodiment, the information received includes at least one of technician information or replacement component information. In another embodiment, the technician information includes at least one of technician cost for each arrival location or technician response time for each arrival location. In another embodiment, the replacement component information includes at least one of a replacement component cost for each arrival location or a replacement component shipping time for each arrival location. In another embodiment, the method includes generating, by a processor, a graph database including the information received from the one or more systems. In another embodiment, the method includes determining, by the processor, an assignment of the plurality of available aircraft to the plurality of flight schedules by applying a graph traversal algorithm to the graph database. In another embodiment, the graph traversal algorithm determines the assignment based on at least one of a disruption cost, a disruption time, or an ability to perform scheduled maintenance.

A tail assignment system is disclosed, in accordance with one or more embodiments of the present disclosure. In one embodiment, the tail assignment system includes a non-transitory memory maintaining program instructions. In another embodiment, the tail assignment system includes a processor configured to execute the program instructions maintained on the non-transitory memory. In another embodiment, the processor is configured, by executing the program instructions, to receive information from a network. In another embodiment, the received information includes flight schedules. In another embodiment, each of the flight schedules includes a departure time, a departure location, and an arrival location. In another embodiment, the received information includes available aircraft. In another embodiment, the available aircraft each include a failure probability resulting in an aircraft-on-ground (AOG) event. In another embodiment, each of the available aircraft further including a current location. In another embodiment, the received information includes at least one of technician information or replacement component information. In another embodiment, the technician information includes at least one of technician cost for each arrival location or technician response time for each arrival location. In another embodiment, the replacement component information includes at least one of a replacement component cost for each arrival location or a replacement component shipping time for each arrival location. In another embodiment, the processor is configured, by executing the program instructions, to generate a graph database including the information received from the one or more systems. In another embodiment, the processor is configured, by executing the program instructions, to determine an assignment of the plurality of available aircraft to the plurality of flight schedules by applying a graph traversal algorithm to the graph database. In another embodiment, the graph traversal algorithm determines the assignment based on one or more of a disruption cost, a disruption time, or an ability to perform scheduled maintenance.

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the invention and together with the general description, serve to explain the principles of the invention.

### BRIEF DESCRIPTION OF THE DRAWINGS

Implementations of the concepts disclosed herein may be better understood when consideration is given to the following detailed description thereof. Such description refers to the included drawings, which are not necessarily to scale, and in which some features may be exaggerated, and some features may be omitted or may be represented schematically in the interest of clarity. Like reference numerals in the drawings may represent and refer to the same or similar element, feature, or function. In the drawings:
FIGS. 1A-1E depict a block diagram of a tail assignment system, in accordance with one or more embodiments of the present disclosure.
FIG. 2 depicts a graph database generated based on received information, in accordance with one or more embodiments of the present disclosure.
FIG. 3 depicts a flow-diagram of a method of tail assignment, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings. Prognostics Health Management (PHM) systems and technology provides an ability to identify components nearing end-of-life. The PHM data may be used to replace components identified as near failure. The PHM data may also be used to reduce a likelihood of component failure at an undesirable location. In this regard, aircraft may be assigned to a flight schedule to minimize costs or a likelihood of the aircraft becoming aircraft-on-ground. For example, information may be received regarding available aircraft, a probability of a component on a minimum equipment list (MEL) failing for each aircraft, a set of flights that need to be run, and destinations with parts and/or maintenance capabilities. The available aircraft may then be assigned to the flights to minimize an aircraft-on-ground (AOG) times factoring in the maintenance and/or repair capabilities at the destinations. The available aircraft may also be assigned to the flights to minimize the cost of the aircraft, the cost being associated with one or more of passenger disruption, cargo disruption, or repair costs. The available aircraft may also be assigned to the flights to position the available aircraft for performing regularly scheduled maintenance based on cost, part availability, or labor availability. In this regard, the PHM or the integrated aircraft health management data may be used to reduce the risk of disruptions before identified parts are replaced. Furthermore, wear may be accounted for while allowing full operational functionality. Furthermore, a cost associated with component failure may be reduced.

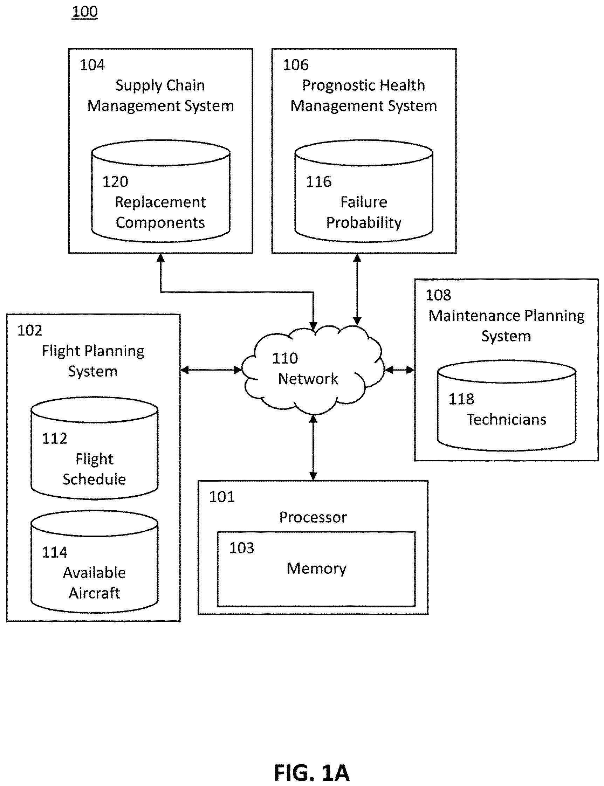

Referring now to FIGS. 1A-1E, a tail assignment system 100 is disclosed, in accordance with one or more embodiments of the present disclosure. In embodiments, the tail assignment system 100 may include a processor 101 and a memory 103. The memory 103 may maintain program instructions which may be executed by the processor 101. By executing the program instructions, the processor 101 may execute any of the various process steps described throughout the present disclosure. In one embodiment, the processor 101 may be configured to execute a tail assignment method. In this regard, the processor 101 may be configured to receive information. The information may be received from any suitable system, such as, but not limited to, a flight planning system 102, a supply chain management system 104, a prognostic health management system 106, or a maintenance planning system 108. The processor 101 may then generate a graph database based on the received information. The processor 101 may then determine an assignment of available aircraft to flight schedules by applying a graph traversal algorithm to the graph database.

For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the one or more processors 101 may include any device configured to execute algorithms and/or instructions (e.g., program instructions stored in memory 103). Furthermore, the memory 103 may include any storage medium known in the art suitable for storing program instructions executable by the associated processor 101. For example, the memory medium may include a non-transitory memory medium. By way of another example, the memory medium may include, but is not limited to, a read-only memory (ROM), a random-access memory (RAM), a magnetic or optical memory device (e.g., disk), a solid-state drive and the like. It is further noted that memory medium may be housed in a common controller housing with the processor 101. In one embodiment, the memory medium may be located remotely with respect to the physical location of the one processor 101.

In some embodiments, the processor 101 is configured to receive the information from a network 110. The network 110 may include any wireline communication protocol (e.g., DSL-based interconnection, cable-based interconnection, T9-based interconnection, and the like) or wireless communication protocol (e.g., GSM, GPRS, CDMA, EV-DO, EDGE, WiMAX, 3G, 4G, 4G LTE, 5G, Wi-Fi protocols, RF, Bluetooth, and the like) known in the art. By the network 110, the processor 101 may be configured to receive information from one or more systems. In this regard, the processor 101 may receive information from one or more of the flight planning system 102, the supply chain management system 104, the prognostic health management system 106, or the maintenance planning system 108 by the network 110.

The herein described tail assignment system 100 illustrates different components contained within, or connected with, other components by the network 110. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected," or "coupled," to each other to achieve the desired functionality, and any two components capable of being so associated can also be viewed as being "couplable," to each other to achieve the desired functionality. Specific examples of couplable include but are not limited to wirelessly interactable and/or wirelessly interacting components and/or logically interacting and/or logically interactable components. For example, one or more of the processor 101 or the memory 103 may include a cloud-based architecture. For instance, it is contemplated herein that the processor 101 or the memory 103 may include a hosted server and/or cloud computing platform including, but not limited to, Amazon Web Services (e.g., Amazon EC2, and the like). In this regard, the tail assignment system 100 may include a software as a service (SaaS) configuration, in which various functions or steps of the present disclosure are carried out by the cloud-based architecture. By way of another example, one or more of the flight planning system 102, the supply chain management system 104, the prognostic health management system 106, or the maintenance planning system 108 may be jointly integrated.

The processor 101 may receive information, such as, but not limited to, flight schedules 112. The flight schedules 112 may include one or more of a boarding time, a departure time, a departure location, an arrival location, an arrival time, and a number of passengers. In some embodiments, the flight schedules 112 are received from the flight planning system 102. The flight planning system 102 may determine the flight schedules 112 in accordance with any method known in the art. The flight planning system 102 may determine the flight schedules 112 based on travel demand between departure and arrival locations. In this regard, the flight schedules 112 may include a list of planned flights for a given type of aircraft. The planned flights for the given type of aircraft may be selected based on the number of seats of the associated aircraft type, together with the passenger demand between the flight locations. In this regard, additional passenger demand between flight locations may require either multiple aircraft of a type including a smaller number of seats or an aircraft with a type including a larger number of seats.

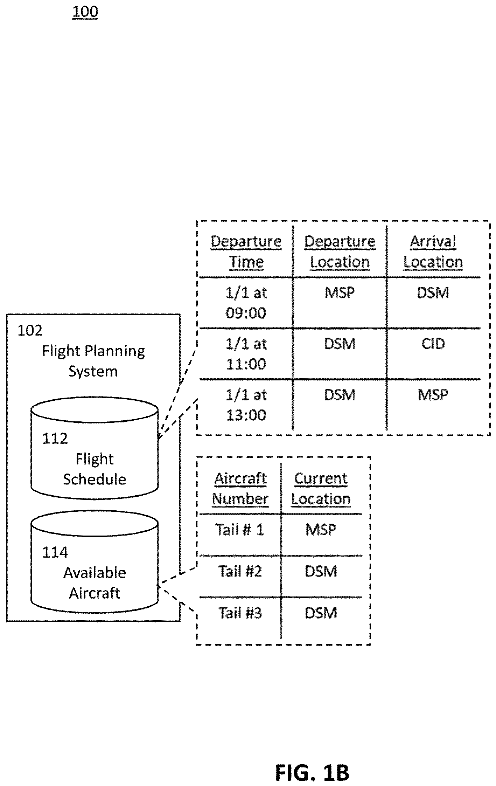

For example, FIG. 1B depicts exemplary flights of the flight schedules 112. A first flight from Minneapolis - Saint Paul International Airport (MSP) to Des Moines International Airport (DSM) on January 1st at nine hundred hours. A second flight from Des Moines International (DSM) to the Eastern Iowa Airport (CID) on January 1st at eleven hundred hours. A third flight from Des Moines International Airport (DSM) to the Minneapolis - Saint Paul International Airport (MSP) on January 1st at thirteen hundred hours.

The processor may also receive information, such as, but not limited to, available aircraft 114. The available aircraft 114 may each include a current location. The current locations may be received from the flight planning system 102. For example, FIG. 1B further depicts exemplary aircraft of the available aircraft 114. A first aircraft, tail one, may be currently located at the Minneapolis - Saint Paul International Airport (MSP). A second aircraft, tail two, may be currently located at the Des Moines International Airport (DSM). A third aircraft, tail three, may be currently located at the Des Moines International Airport (DSM).

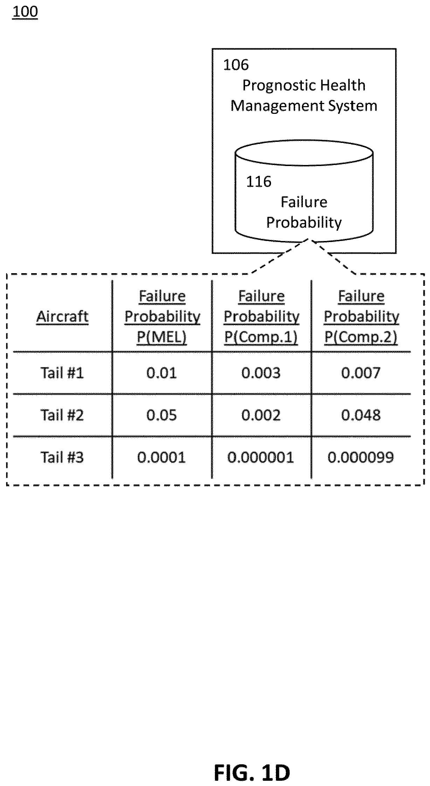

The available aircraft 114 may also each include an associated failure probability 116. The failure probability 116 may include a probability of failure resulting in an aircraft-on-ground (AOG) event. The failure probability 116 may be received from the prognostic health management system 106. The prognostic health management system 106 may determine the failure probability 116 based on reliability data for components. In some instances, the components may be required of a Minimum Equipment List (MEL) of the associated aircraft. The aircraft may fail to meet the MEL if various necessary components fail. The probability of component failure resulting in non-compliance with the minimum equipment list may be determined by a probability of component failure for one or more MEL components. In this regard, the aircraft may include a MEL with multiple components. Each of the components may include a probability of failure determined from the prognostic health management system 106. A statistical functional may be performed on the probability of component failure for each of the MEL components to determine the probability of failure to comply with the MEL or similarly a probability of compliance with the MEL. The statistical functional may include any suitable statistical function, such as, but not limited to, a summation, a mean (e.g., arithmetic, geometric), a median, a mode, a binomial distribution, a Poisson distribution, or a hypergeometric distribution. For example, FIG. 1D depicts exemplary failure probabilities of the failure probability 116 information. The first aircraft, tail one, may include a probability of component failure for one or more MEL components (e.g., P(Comp.1) of .003 and P(Comp.2) of .007) and a probability of failure resulting in non-compliance with the minimum equipment list based on the statistical functional (e.g., P(MEL) of .01 determined by summation). The second aircraft, tail two, may include a probability of component failure for one or more MEL components (e.g., P(Comp.1) of .002 and P(Comp.2) of .048) and a probability failure resulting in non-compliance with the minimum equipment list based on the statistical functional (e.g., P(MEL) of 0.05 determined by summation). The third aircraft, tail three, may include a probability of component failure for one or more MEL components (e.g., P(Comp.1) of .000001 and P(Comp.2) of .000099) and a probability of failure resulting in non-compliance with the minimum equipment list based on the statistical functional (e.g., P(MEL) of 0.0001 determined by summation). In some instances, the failure probability 116 may be a probability of failure to comply with a mission plan. The mission plan may include one or more mission specific components. In this regard, the failure probability may be based on a probability of failure of mission specific components resulting in a failure to complete the specific mission plan. Such mission failure probability may similarly be determined by any suitable statistical functional.

The prognostic health management system 106 may determine the failure probability 116 for the components based on various data. The data may be from one or more of the maintenance planning system 108 or the prognostic health management system 106. The maintenance planning system 108 may include various data, such as, but not limited to, planned maintenance events, reliability data, current MEL status, or current faults. For example, the maintenance planning system 108 may include data regarding maintenance intervals for the aircraft or components of the aircraft. Such maintenance intervals may include, but are not limited to, a number of flight hours (e.g., for fuel pumps, electric generators, etc.), a number of flight cycles (e.g., for landing gear, air starter, brakes, pressurization systems), or a calendar time (e.g., for fire extinguishers, hull structure). In some embodiments, the failure probability 116 may be time-boxed based on the number of hours, the number of cycles, or the calendar time. In this regard, the failure probability 116 may increase for flight assignment with increased number of hours, cycles, or calendar time. Such data from the maintenance planning system 108 may be communicated with the prognostic health management system 106 by the network 110.

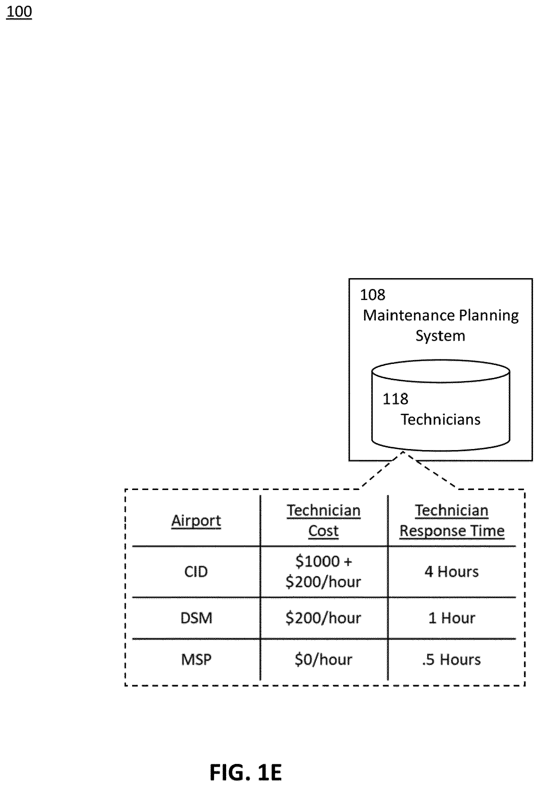

The processor 101 may also receive information, such as, but not limited to, technician 118 information. The technician 118 information may be associated with each arrival location of the flight schedules. The technician 118 information may include one or more of a technician cost or a technician response time. The technician cost or response time may be received from the maintenance planning system 108. The technician cost may include any suitable information, such as, but not limited to, labor fees (e.g., flat-cost, hourly cost, etc.) or a cost to get the technician to location (e.g., transportation costs). The technician response time may be determined based on average response time for the technician. The technician response time may also be determined based on the transport time or a time to transport equipment or tools. For example, FIG. 1E depicts exemplary technicians of the technician 118 information. Technicians at the Eastern Iowa Airport (CID) may include a flat cost of one-thousand dollars plus two-hundred dollars per hour, with a response time of four hours. Technicians at the Des Moines International Airport (DSM) may include a cost of two-hundred dollars per hour, with a response time of one hour. Technicians at the Minneapolis - Saint Paul International Airport (MSP) may include a cost of zero dollars per hour, with a response time of one-half hour.

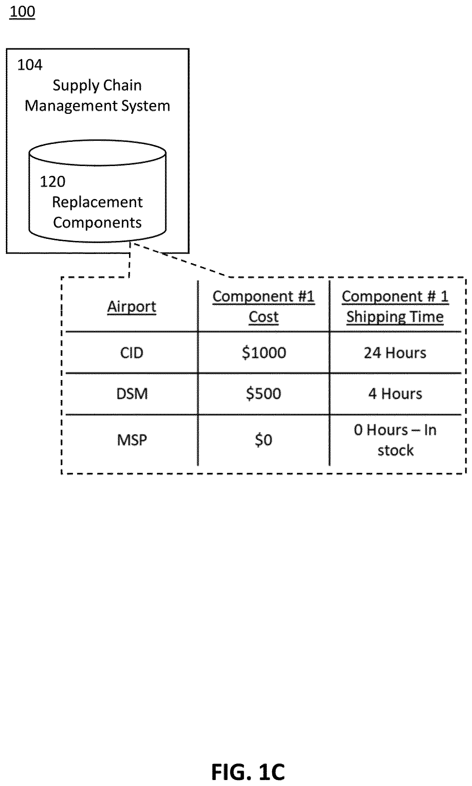

The processor 101 may also receive information, such as, but not limited to, replacement component 120 information. The replacement component 120 information may be associated with each arrival location of the flight schedules. The replacement component 120 information may include one or more of a replacement component cost or a replacement component shipping time. The replacement component cost or the replacement component shipping time may be received from the supply chain management system 104. Such shipping may include, but is not limited to, in-stock, courier shipping, or shipping from a supplier. The replacement component cost may include, but is not limited to, a shipping cost, a cost to purchase the component, or a cost to assemble. For example, FIG. 1C depicts exemplary replacement component information of the replacement component 120 information. The replacement component may be shipped to the Eastern Iowa Airport (CID) with a cost of one-thousand dollars and a shipping time of twenty-four hours. The replacement component may be shipped to the Des Moines International Airport (DSM) with a cost of five-hundred dollars and a shipping time of four hours. The replacement component may be shipped to the Minneapolis - Saint Paul International Airport (MSP) with no cost and no shipping time (e.g., the replacement component is in stock).

In some embodiments, the supply chain management system 104 may determine the replacement components 120. The supply chain management system 104 may represent a list of available replacement components in a supply chain knowledge graph. The supply chain knowledge graph may represent how to source a replacement component to any given location with one or more of cost estimates or time estimates. In this regard, the replacement components 120 may be represented as nodes connected in relation to each of the locations with a directional edge representing a shipping cost or a shipping time. A graph algorithm may then be applied to the supply chain knowledge graph to determine the cost estimates or the time estimates. The graph algorithm may include any suitable algorithm, such as, but not limited to, a pathfinding algorithm (e.g., an A-star (A*) algorithm, a Minimum Weight Spanning Tree Algorithm, etc.), a node importance algorithm (e.g., a page rank algorithm, a degree centrality algorithm, etc.), or a community detection algorithm (e.g., a Triangle counting algorithm, a weakly connected components algorithm, etc.). The pathfinding algorithm may determine the means to get the maintenance parts to the desired location in a quickest amount of time or with a reduced cost. The node importance algorithm may determine which supply chain graph node is the most important for a given scenario. The community detection algorithm may segment the component nodes based on component failure.

Based on the received information, the processor 101 may be configured to generate a graph database (e.g., graph database 200). The processor 101 may generate the graph database by representing the received information as nodes and connecting the nodes with edges. In some embodiments, the graph database may include a multi-partite graph database. In this regard, the graph database may include one or more types of nodes. Such nodes may be connected by one or more directional edges. The edges may connect the nodes based on an association of the received information.

The processor 101 may then determine an assignment of the available aircraft to the flight schedules. The processor 101 may determine the assignment by applying a graph traversal algorithm to the graph database. The graph traversal algorithm may find paths between nodes of the graph database for achieving desired goals. In some embodiments, the graph traversal algorithm determines the assignment by weighting the desired goals based upon a user input. The desired goals may include one or more of reducing the weight of one or more of a disruption cost, reducing a disruption time, or increasing an ability to perform scheduled maintenance. In some embodiments, the graph traversal algorithm includes a pathfinding algorithm, such as the A-Star (A*) algorithm.

The graph traversal algorithm may determine the assignment at least partially based on reducing a disruption cost. In this regard, the graph traversal algorithm may determine the assignment for reducing the disruption cost by taking into account the technician cost and the replacement component cost. The disruption cost may further be determined based on one or more of a fixed cost-per-flight, a fixed cost-per-passenger, or a cost-per-passenger of missed connections. In this regard, the fixed cost-per-passenger may be based on a quantity of scheduled passengers of the scheduled flight. The cost-per-missed connections may be based on subsequent flight legs of the scheduled passengers.

The graph traversal algorithm may determine the assignment at least partially based on a disruption time. The graph traversal algorithm may determine the assignment for reducing the disruption time by taking into account the technician response time and the replacement component shipping time. The graph traversal algorithm may also reduce the disruption time by assigning the available aircraft to the flight schedule based on the maintenance information such that the components may be replaced during a gate-turn. In this regard, the graph traversal algorithm may determine the shipping time of the replacement components is zero, such that the component may be replaced immediately. This may be beneficial in reducing a probability of an Aircraft-Out-Of-Commission-For-Parts (AOCP) event, where the aircraft should be available for service but is not because of the lack of one or more parts.

The graph traversal algorithm may determine the assignment at least partially based on an ability to perform scheduled maintenance. In this regard, the current number of flight hours for the associated aircraft may be compared with a required maintenance interval (e.g., 50-hour inspections, 100-hour inspections, annual inspections, A-checks, B-checks, C-checks, D-checks, etc.). Such scheduled maintenance may include various tasks involving the periodic servicing, lubrication, and cleaning of aircraft, engines, propellers, rotors, appliances, or other parts at prescribed intervals. Aircraft nearing a scheduled maintenance may be assigned to an arrival location, based on an ability of the arrival location to perform the scheduled maintenance.

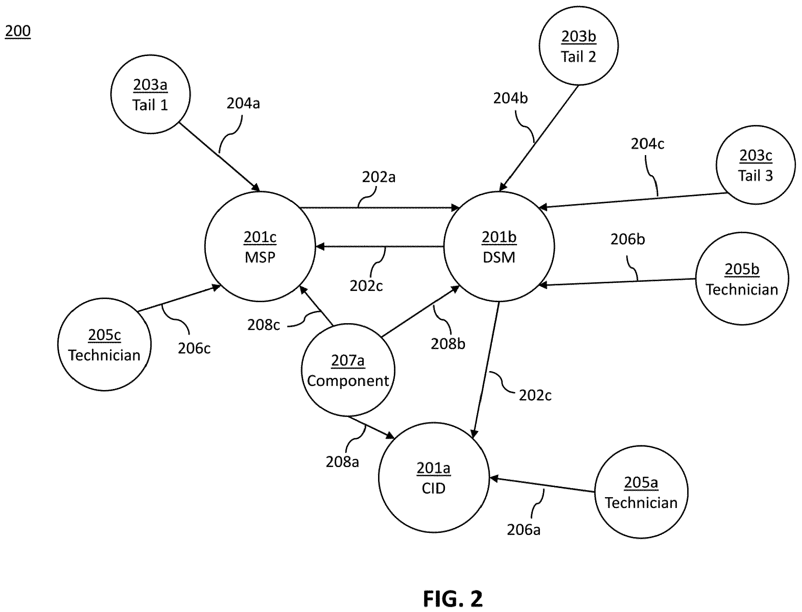

Referring now to FIG. 2, a graph database 200 is described, in accordance with one or more embodiments of the present disclosure. In embodiments, the tail assignment system 100 may generate the graph database 200. The graph database 200 may include a multi-partite graph database. In this regard, the graph database 200 may include one or more types of nodes. Such nodes may be connected by one or more directional edges. The directional edges may indicate various information about the nodes, such as, but not limited to, flights between the airport locations, current locations of the aircraft, failure probability of the aircraft, failure probability of one or more components of the aircraft, replacement component shipping time for each of the locations, replacement component costs for each of the locations, technician response times for each of the locations, or technician costs for each of the locations.

A type of node may include one or more location nodes 201. The location nodes 201 may indicate the various locations at which aircraft may depart or arrive. In this regard, the location nodes 201 may include the departure locations and the arrival locations (e.g., airports). The location nodes 201 may be connected by one or more directional edges 202. The directional edges 202 may represent the scheduled flights. In this regard, a departure node may be directionally connected to an arrival node by the directional edge 202. The directional edge 202 may indicate information, such as, but not limited to, a scheduled flight number, a departure time, or an arrival time. The directional edge 202 may further include information regarding the scheduled flight number, such as, but not limited to, a number of passengers on-board the flight and subsequent flight legs of the passengers. For example, a CID node 201a may represent the Eastern Iowa Airport (CID), a DSM node 201b may represent the Des Moines International Airport (DSM), and a MSP node 201c may represent the Minneapolis - Saint Paul International Airport (MSP). The MSP node 201c is connected to the DSM node 201b by a directional edge 202a, the directional edge 202a indicating the flight on January 1st at nine hundred hours. The DSM node 201b is connected to the CID node 201a by a directional edge 202b, the directional edge 202b indicating the flight on January 1st at eleven hundred hours. The DSM node 201b is connected to the MSP node 201a by a directional edge 202c, the directional edge 202c indicating the flight on January 1st at thirteen hundred hours. In this regard, the relationship between the location nodes 201 may be generated based on the flight schedule 112.

A type of node may also include one or more aircraft nodes 203. The aircraft nodes 203 may be connected to one or more nodes, such as, but not limited to the location nodes 201. The aircraft nodes 203 may be connected to the location nodes 201 by one or more directional edges 204. The directional edges 204 may indicate information, such as, but not limited to, a current location or a failure probability. The failure probability may indicate a failure resulting in an aircraft-on-ground (AOG) event (e.g., failure to meet the MEL). The failure probability may also indicate a failure of a component. For example, a tail-one node 203a may represent the first aircraft, tail one. The tail-one node 203a is connected to the MSP node 201c by a directional edge 204a. The directional edge 204a may indicate information, such as the current location, the probability of component failure for one or more MEL components (e.g., P(Comp.1) of .003 and P(Comp.2) of .007), or the probability of failure resulting in non-compliance with the minimum equipment list based on the statistical functional (e.g., P(MEL) of .01) of the tail one aircraft. A tail-two node 203b may represent the second aircraft, tail two. The tail-two node 203b is connected to the DSM node 201b by a directional edge 204b. The directional edge 204b may indicate information, such as, the current location, the probability of component failure for one or more MEL components (e.g., P(Comp.1) of .002 and P(Comp.2) of .048), or the probability failure resulting in non-compliance with the minimum equipment list based on the statistical functional (e.g., P(MEL) of 0.05) of the tail two aircraft. A tail-three node 203c may represent the third aircraft, tail three. The tail-three node 203c is connected to the DSM node 201b by a directional edge 204c. The directional edge 204c may indicate information, such as, the current location, the probability of component failure for one or more MEL components (e.g., P(Comp.1) of .000001 and P(Comp.2) of .000099), or the probability of failure resulting in non-compliance with the minimum equipment list based on the statistical functional (e.g., P(MEL) of 0.0001) of the tail three aircraft. In this regard, the relationship between the aircraft nodes 203 and the location nodes 201 may be determined based on the available aircraft 114 information.

A type of node may also include one or more technician nodes 205. The technician nodes 205 may be connected to one or more nodes, such as, but not limited to the location nodes 201. The technician nodes 205 may be connected to the location nodes 201 by one or more directional edges 206. The directional edges 206 may indicate information, such as, but not limited to, a technician cost or a technician response time. For example, a first technician node 205a is connected to the CID node 201a with a directional edge 206a. The directional edge 206a may indicate information, such as, the flat cost of one-thousand dollars plus two-hundred dollars per hour, and the response time of four hours of technician or technicians at the CID airport. A second technician node 205b is connected to the DSM node 201b with a directional edge 206b. The directional edge 206b may indicate information, such as, the cost of two-hundred dollars per hour, with the response time of one hour of the technician or technicians at the DSM airport. A third technician node 205c is connected to the MSP node 201c with a directional edge 206c. The directional edge 206c may indicate information, such as, the cost of zero dollars per hour, with the response time of one-half hour of the technician or technicians at the MSP airport. In this regard, the relationship between the technician nodes 205 and the location node 201 may be determined based on the technician 118 information.

A type of node may also include one or more component nodes 207. The component nodes 207 may be connected to one or more nodes, such as, but not limited to the location nodes 201. The component nodes 207 may be connected to the location nodes 201 by one or more directional edges 208. The directional edges 208 may indicate information, such as, but not limited to, the shipping time to the location or the cost. For example, a component node 207a for a first component is connected to the CID node 201a with a directional edge 208a. The directional edge 208a may indicate information, such as, the cost of one-thousand dollars and the shipping time of twenty-four hours of the first component to the CID airport. The component node 207a for the first component is connected to the DSM node 201b with a directional edge 208b. The directional edge 208b may indicate information, such as, the cost of five-hundred dollars and the shipping time of four hours of the first component to the DSM airport. The component node 207a for the first component is connected to the MSP node 201c with a directional edge 208c. The directional edge 208c may indicate information, such as, the no cost and the no shipping time of the first component to the MSP airport. In this regard, the relationship between the component nodes 207 and the location nodes 201 may be determined based on the replacement component 120 information.

The component nodes 207 may also be connected one or more other nodes, such as, but not limited to, the aircraft nodes 203. For example, the component nodes 207 may include directional edges (not depicted) to each aircraft node 203 on which the component is installed. The directional edges may indicate information, such as, the probability of failure associated with the specific component installed on the aircraft, the flight hours of the component, the flight cycles of the component, or the calendar days the component has been in use. In this regard, the relationship between the component nodes 207 and the aircraft nodes 203 may be determined based, at least in part, on the failure probability 116 information.

As may be understood, the various examples described in reference to the nodes or edges of the graph database 200 are not intended to be limiting. The graph database 200 is merely illustrative of the exemplary flight schedules 112, available aircraft 114, failure probabilities 116, technicians 118, and replacement components 120 of FIGS. 1B-1E. In this regard, the tail assignment system 100 may be applied to a larger or more dimensionally complex set of flight schedules 112, available aircraft 114, failure probabilities 116, technicians 118, and replacement components 120. For example, an airline may include several hundred to a thousand aircraft in a fleet, or more. Each of such aircraft may be represented as a node with edges connecting the aircraft to the location nodes. By way of another example, flights may be scheduled between many hundreds of locations, or more. Each of such locations may be represented as a node with connections indicating the flights. By way of another example, an aircraft may include hundreds of thousands or millions of replacement components, where each such replacement component may be sourced from one or more sources. Each of such components may be represented as a component node. Such component nodes may be connected to one or more of the aircraft nodes or the location nodes. Furthermore, the graph database 200 may include various additional or alternative types of nodes. Furthermore, there may be additional or alternative relational edges between the various types of nodes.

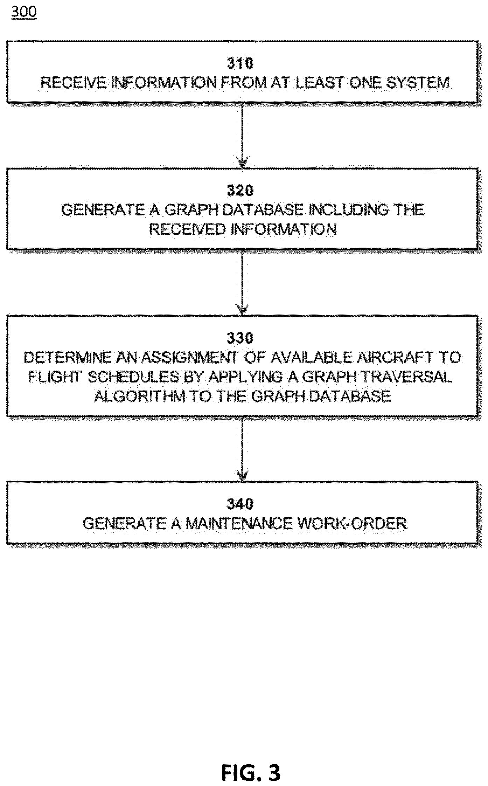

Referring now to FIG. 3, a method 300 of tail assignment is described, in accordance with one or more embodiments of the present disclosure. The embodiments and the enabling technologies described previously herein in the context of the tail assignment system 100 should be interpreted to extend to the method 300. It is further recognized, however, that the method 300 is not limited to the tail assignment system 100.

In a step 310, information is received from one or more systems. The information may be received from any suitable system, such as, but not limited to, a flight planning system, a supply chain management system, a prognostic health management system, or a maintenance planning system. The information may be received from the one or more systems by a network.

The information received may include multiple flight schedules. Each of the flight schedules may include a departure time, a departure location, and an arrival location. In some embodiments, the flight schedules may include one or more flight legs connecting the departure locations and the arrival locations. For example, the flight schedule may include two or more flight legs connecting the departure location and the arrival location, with a layover location between the departure location and the arrival location.

The information received may also include available aircraft. The available aircraft may each include a current location. The available aircraft may each include a failure probability resulting in an aircraft-on-ground (AOG) event. The failure probability may be determined based on reliability data for components. For example, the components may be required of a Minimum Equipment List (MEL) of the associated aircraft. The aircraft may fail to meet the MEL if various necessary components fail, such that the aircraft is required to be grounded. By way of another example, the components may be required for a mission specific requirement based on a mission plan. In embodiments, the failure probability may be determined for the components based on various data. The data may be from one or more of a maintenance data or a prognostic health management data. For example, the data may include one or more of existing component faults, expected reliability of components, a current flight time of the components, or a current number of cycles of the components. In some embodiments, the failure probability may be time-boxed based on a number of hours, a number of cycles, or a number of flights. In this regard, the failure probability may increase for flight assignments with increased number of hours, cycles, or flights.

The information received may also include maintenance information for each arrival location of the flight schedules. The maintenance information may include one or more of a technician cost, a technician response time, a replacement component cost, or a replacement component shipping time. The replacement components may include MEL components.

In a step 320, a graph database is generated. The graph database may include the information received from the one or more systems. In this regard, the graph database may include the flight schedules, the available aircraft, and the maintenance information. The graph database may represent the received information as nodes. The nodes may be connected with other nodes by directional edges. In embodiments, the graph database may include a multi-partite graph database with a variety of node types connected by directional edges (e.g., the graph database 200).

In a step 330, an assignment of the available aircraft to the flight schedules is determined. The assignment may be determined by applying a graph traversal algorithm to the graph database. The graph traversal algorithm may find paths between nodes of the graph database for achieving desired goals. The desired goals may include one or more of reducing the weight of one or more of a disruption cost, reducing a disruption time, or increasing an ability to perform scheduled maintenance.

Relational weights between the graph database nodes may be based on any suitable information, such as, but not limited to, one or more of the failure probability of the available aircraft, the current location of the available aircraft, the scheduled flights to the arrival airport, the technician cost of the arrival airport, the technician response time for each arrival airport, the replacement component cost for each arrival airport, or the replacement component shipping time for each arrival airport. The graph traversal algorithm may include any suitable algorithm for traversing the nodes of the graph database to achieve the desired outcome, such as, but not limited to a pathfinding algorithm. For example, the pathfinding algorithm may include an A-Star (A*) algorithm. In this regard, the A-Star algorithm may determine an assignment of the available aircraft to the flight schedules based the desired disruption cost, the disruption time, or the ability to perform scheduled maintenance. In this regard, the desired goal may be represented as a cost, by which the A-Star algorithm may find a path (e.g., assignment of the aircraft to the flight schedules) having a reduced cost. Although the graph traversal algorithm is described as a pathfinding algorithm, such as the A-star algorithm, this is not intended as a limitation of the present disclosure. In this regard, the graph traversal algorithm may include any suitable algorithm, such as, but not limited to a breadth first algorithm, a depth first algorithm, or Dijkstra's algorithm.

In a step 340, a maintenance work-order is generated. The maintenance work-order may be generated for the available aircraft at the assigned arrival location. In this regard, the maintenance work-order may indicate the required maintenance for the component of the associated aircraft. The maintenance work-order may be supplied to the technician at the arrival location for repair or replacement of the component.

The method described herein may include storing results of one or more steps of the method embodiments in memory. The results may include any of the results described herein and may be stored in any manner known in the art. The memory may include any memory described herein or any other suitable storage medium known in the art. After the results have been stored, the results can be accessed in the memory and used by any of the method or system embodiments described herein, formatted for display to a user, used by another software module, method, or system, and the like. Furthermore, the results may be stored "permanently," "semi-permanently," temporarily," or for some period of time. For example, the memory may be random access memory (RAM), and the results may not necessarily persist indefinitely in the memory. It is further contemplated that each of the embodiments of the method described above may include any other step(s) of any other method(s) described herein. In addition, each of the embodiments of the method described above may be performed by any of the systems described herein. It is to be noted that the specific order of steps in the foregoing disclosed methods are examples of exemplary approaches. Based upon design preferences, it is understood that the specific order of steps in the method can be rearranged while remaining within the scope of the present disclosure.

Referring generally again to FIGS. 1A-3.

In some embodiments, the processor 101 is further configured to send one or more tail assignments to the flight planning system 102. For example, after assigning the available aircraft to the flight schedule the processor 101 may provide such assignments to the flight planning system 102. In some embodiments, the processor 101 is configured to send one or more order requests to the supply chain management system. For example, after assigning the available aircraft to the flight schedule, the processor 101 may determine a probability that the aircraft needs a part at an arrival location. Where the probability exceeds a threshold, the processor 101 may request a transfer of the part to the arrival location. In some embodiments, the processor 101 is configured to send one or more maintenance work-orders to the maintenance planning system 108. In this regard, the maintenance planning system 108 may then provide the maintenance work-order to a technician at the arrival location to repair or replace one or more components.

Although the tail assignment system 100 was provided with exemplary applications for consumer transportation, this is not intended as a limitation on the present disclosure. In this regard, the tail assignment system 100 or the method 300 may be applied to the assignment of a variety of mobile vehicles. For example, non-consumer aircraft may be assigned based on mission requirements. Furthermore, the vehicles do not require human operators. In this regard, the vehicles may include Unmanned Aerial Vehicle (UAVs). Where the vehicles include such Unmanned Aerial Vehicles, various battery information may be included within the generated graph database. For example, such Unmanned Aerial Vehicles may be powered by a battery with one or more of a charge level or a charge capacity. The graph database may represent such battery information as one or more of a node or a directional edge. In this regard, such Unmanned Aerial Vehicles may be assigned to arrival locations based, at least in part, on the battery information.

One skilled in the art will recognize that the herein described components operations, devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components, operations, devices, and objects should not be taken as limiting.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," and the like). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A computer-implemented method (300) for tail assignment comprising:
receiving (310) information from at least one system, the information including:
a plurality of flight schedules, each of the plurality of flight schedules including a departure time, a departure location, and an arrival location;
a plurality of available aircraft, each of the plurality of available aircraft including a failure probability resulting in an aircraft-on-ground (AOG) event, each of the plurality of available aircraft further including a current location; and
at least one of technician information or replacement component information, the technician information including at least one of a technician cost for each arrival location or a technician response time for each arrival location, the replacement component information including at least one of a replacement component cost for each arrival location or a replacement component shipping time for each arrival location;
generating (320), by a processor, a graph database including the information received from the at least one system;
determining (330), by the processor, an assignment of the plurality of available aircraft to the plurality of flight schedules by applying a graph traversal algorithm to the graph database, wherein the graph traversal algorithm determines the assignment based on at least one of a disruption cost, a disruption time, or an ability to perform scheduled maintenance.

2. The tail assignment method of claim 1, wherein at least one of the plurality of flight schedules comprises at least two flight legs connecting the departure location and the arrival location.

3. The tail assignment method of claim 1 or 2, wherein the failure probability is a probability of a failure to satisfy a Minimum Equipment List (MEL).

4. The tail assignment method of claim 3, wherein the failure probability is determined based on reliability data for a plurality of components of the Minimum Equipment List.

5. The tail assignment method of any preceding claim, wherein at least one of the replacement component cost or the replacement component shipping time is determined by applying a second graph traversal algorithm to a supply chain knowledge graph, the supply chain knowledge graph including a plurality of replacement component nodes in relation to the arrival location.

6. The tail assignment method of claim 5, wherein the second graph traversal algorithm comprises a pathfinding algorithm, the pathfinding algorithm comprises at least one of an A-star (A*) algorithm or a Minimum Weight Spanning Tree algorithm.

7. The tail assignment method of claim 5, wherein the second graph traversal algorithm comprises a node importance algorithm, wherein the node importance algorithm comprises at least one of a page rank algorithm or a degree centrality algorithm.

8. The tail assignment method of claim 5, wherein the second graph traversal algorithm comprises a community detection algorithm, wherein the community detection algorithm comprises at least one of a Triangle Counting algorithm or a Weakly Connected Components algorithm.

9. The tail assignment method of any preceding claim, wherein the disruption cost is determined by at least one of a fixed cost-per-flight, a fixed cost-per-passenger, or a cost-per-passenger of missed connections.

10. The tail assignment method of any preceding claim, wherein the graph traversal algorithm is configured to reduce the disruption time by assigning the plurality of available aircraft to the plurality of flight schedules such that at least one component may be replaced during a gate-turn.

11. The tail assignment method of any preceding claim, wherein the graph traversal algorithm comprises a pathfinding algorithm, wherein the pathfinding algorithm comprises an A-star (A*) algorithm.

12. The tail assignment method of any preceding claim or, further comprising generating (340) a maintenance work-order for at least one of the plurality of available aircraft at an assigned arrival location.

13. A tail assignment system comprising:
a non-transitory memory (103) maintaining program instructions;
a processor (101) configured to execute the program instructions maintained on the non-transitory memory causing the processor to:
receive (310) information from a network, the information including:
a plurality of flight schedules, each of the plurality of flight schedules including a departure time, a departure location, and an arrival location;
a plurality of available aircraft, each of the plurality of available aircraft including a failure probability resulting in an aircraft-on-ground (AOG) event, each of the plurality of available aircraft further including a current location; and
at least one of technician information or replacement component information, the technician information including at least one of a technician cost for each arrival location or a technician response time for each arrival location, the replacement component information including at least one of a replacement component cost for each arrival location or a replacement component shipping time for each arrival location;
generate (320) a graph database including the information received from the network; and
determine (330) an assignment of the plurality of available aircraft to the plurality of flight schedules by applying a graph traversal algorithm to the graph database, wherein the graph traversal algorithm determines the assignment based on at least one of a disruption cost, a disruption time, or an ability to perform scheduled maintenance.

14. The tail assignment system of claim 13, wherein the graph traversal algorithm comprises an A-Star (A*) algorithm.

15. The tail assignment system of claim 13 or 14, wherein the processor (101) is connected to a supply chain management system by the network for receiving the replacement component information; wherein the processor is connected to a flight planning system by the network for receiving the plurality of flight schedules and the current location of each of the plurality of available aircraft; wherein the processor is connected to a prognostic health management system by the network for receiving the failure probability; wherein the processor is connected to a maintenance planning system by the network for receiving the technician information.
